# FASCICULE DE BREVET EUROPEEN

(11) **EP 0 538 087 B1**
(45) Date de publication et mention de la délivrance du brevet: **26.04.1995**
(21) Numéro de dépôt: 92402676.8
(22) Date de dépôt: 29.09.1992
(51) Int. Cl.: B23K 26/00

(54) **Procédé de soudage par faisceau laser de deux tôles revêtues**
Verfahren zum Laserstrahlschweissen von beschichteten Bleche
Method for laser beam welding coated metal sheets

(30) Priorité: 18.10.1991 FR 9112921
(43) Date de publication de la demande: 21.04.1993
(73) Titulaire: SOLLAC, 92800 Puteaux (FR)
(72) Inventeur: Peru, Gilles, F-59240 Dunkerque (FR)
(74) Mandataire: Lanceplaine, Jean-Claude

(56) Documents cités:
- EP-A- 0 189 806
- FR-A- 2 658 103

## Description

La présente invention a pour objet un procédé de soudage par faisceau laser de deux pièces métalliques minces, revêtues, notamment de deux tôles.

La présente invention s'applique essentiellement au soudage bord à bord ou en léger recouvrement de deux tôles minces et revêtues.

Il est connu pour souder deux tôles bout à bout de les joindre et de soumettre le plan de joint desdites tôles à un faisceau laser orienté généralement perpendiculairement à la surface à souder.

Pour obtenir le soudage de ces deux tôles, le faisceau laser doit être focalisé de manière à obtenir une tache focalisée sur le plan de joint des deux tôles dont le diamètre est d'environ 0,2 à 0,4 mm afin d'amener l'énergie nécessaire pour faire fondre ponctuellement le métal.

La température locale du métal au niveau de la tache d'impact du faisceau laser est supérieure à 4000°C ce qui permet de former une zone soudée.

Dans le cas du soudage de deux tôles revêtues, par exemple de deux tôles galvanisées ou électro-zinguées, le procédé de soudage par faisceau laser présente un inconvénient majeur.

En effet, la température atteinte ponctuellement par le métal au niveau de la tache d'impact du faisceau laser, supérieure à 4000°C, est très supérieure au point de vaporisation du matériau constituant le revêtement.

Ainsi, dans le cas du soudage d'une tôle revêtue de zinc ou d'aluminium par exemple, après passage du faisceau laser, le zinc ou l'aluminium s'est vaporisé et la tôle soudée n'est plus revêtue au niveau du plan de la soudure sur une largeur supérieure au diamètre de la tache du faisceau laser, dépendant du matériau de revêtement.

Des essais ont montré que lors du soudage de deux tôles revêtues d'aluminium, la zone non revêtue s'étend sur une largeur de 0,6 à 0,8mm et lors du soudage de deux tôles revêtues de zinc, la zone non revêtue s'étend sur une largeur de 0,8 à 1mm.

Compte tenu de la présence sur la tôle soudée d'une zone non revêtue, la protection anti-corrosive n'est plus continue et la zone soudée est susceptible de se corroder et de s'oxyder ce qui entraîne une défectuosité du point de vue de son aspect.

Le brevet EP-A-189.806 décrit un procédé de soudage par faisceau laser de deux tôles minces, revêtues et disposées bord à bord ou en léger recouvrement, comprenant une phase au cours de laquelle on soude les deux tôles en balayant le plan de joint desdites tôles à souder avec le faisceau laser focalisé.

Mais, la tôle soudée présente une zone non revêtue si bien que la protection anti-corrosive n'est pas continue.

La présente invention concerne un procédé de soudage par faisceau laser qui permet de s'affranchir de cet inconvénient.

La présente invention a donc pour objet un procédé de soudage par faisceau laser de deux tôles minces et revêtues, bord à bord ou en léger recouvrement, dans lequel au cours d'une première étape on soude les deux tôles en balayant le joint ou la zone de recouvrement desdites tôles à souder avec le faisceau laser focalisé, caractérisé en ce que, au cours d'une seconde étape, on balaye la zone soudée desdites tôles avec le faisceau laser non focalisé afin d'obtenir une température locale au niveau de la zone soudée comprise entre la température de fusion du revêtement et sa température de vaporisation.

Selon d'autres caractéristiques de l'invention:
- au cours de la première phase, le faisceau laser est focalisé au maximum afin d'obtenir une température locale au niveau du plan de joint supérieur à 4000°C,
- le faisceau laser focalisé forme une tache d'impact sur le plan de joint d'un diamètre compris entre 0,2 et 0,4mm,
- le faisceau laser non focalisé forme une tache d'impact sur le plan de joint d'un diamètre compris entre 2 et 4mm.

Les caractéristiques et avantages de la présente invention apparaîtront au cours de la description qui va suivre, donnée uniquement à titre d'exemple, faite en référence aux dessins annexés, sur lesquels :
- la Fig. 1 est une vue schématique d'une machine de soudage par faisceau laser,
- la Fig. 2 est une vue en coupe du plan de soudure de deux tôles après la première phase du procédé selon l'invention,
- la Fig. 3 est une vue en coupe du plan de soudure des deux tôles après la seconde phase du procédé selon l'invention.

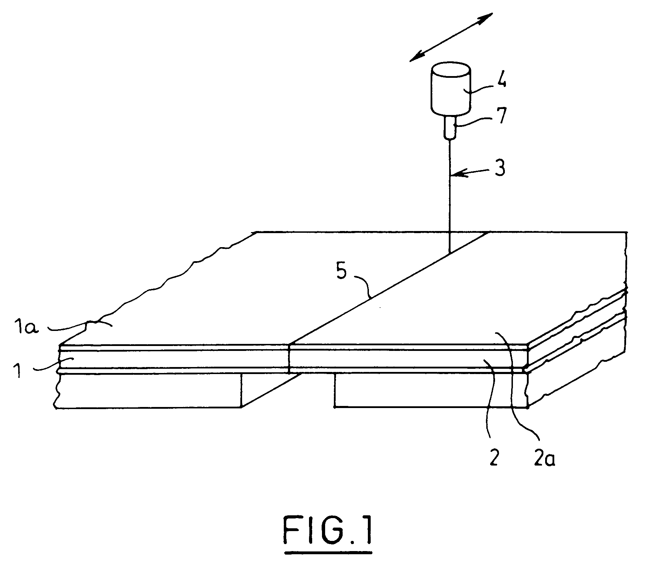

Comme on le voit à la Fig. 1, le procédé selon l'invention est un procédé de soudage bord à bord ou avec un léger recouvrement de deux tôles 1 et 2 au moyen d'un faisceau laser 3 orienté perpendiculairement à la surface à souder.

Chaque tôle 1 et 2 est recouverte d'un revêtement 1a et 2a, par exemple de zinc ou d'aluminium.

Le faisceau laser 3 est généré par un laser 4 mobile le long du plan de joint 5 des deux tôles 1 et 2 à souder, et est muni d'un dioptre 7 permettant de régler la focalisation du faisceau.

Le procédé de soudage selon l'invention comprend deux phases.

Une première phase au cours de laquelle on balaye le faisceau laser 3 le long du plan de joint 5.

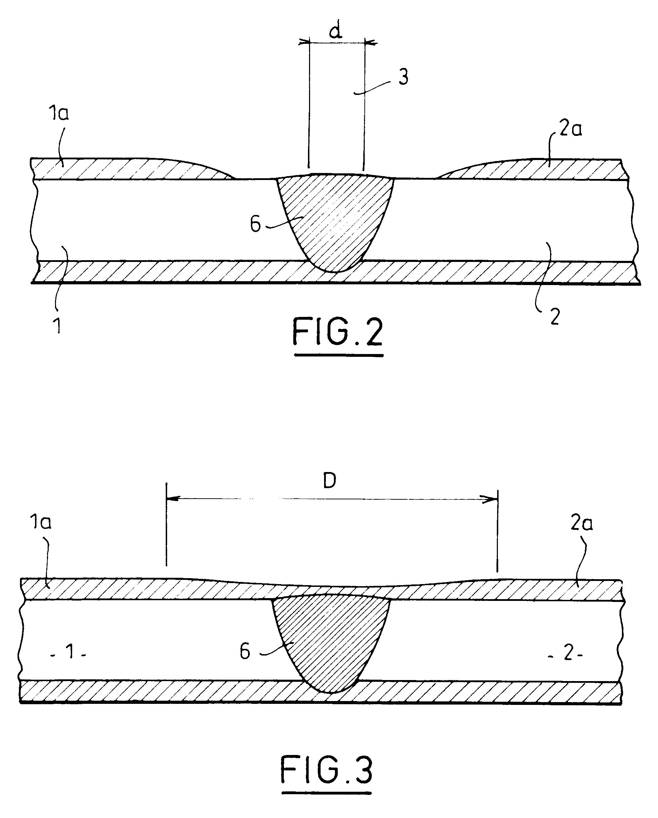

Lors de cette phase, le laser 4 est réglé de manière à ce que le faisceau laser 3 soit focalisé sur le plan de joint 5 pour obtenir une tache d'impact dudit faisceau 3 sur le plan de joint 5 d'un diamètre d compris entre 0,2 et 0,4mm (Fig. 2).

Comme représenté à la Fig. 2 qui est une vue en coupe du plan de joint 5 lors de la première phase du procédé de soudage, le faisceau laser 3 focalisé, de diamètre d, frappe le plan de joint 5 en son milieu et fond ponctuellement le métal des deux tôles 1 et 2 pour former, après son passage, une zone soudée 6.

Après le passage du faisceau laser 3 focalisé, on constate que le revêtement 1a et 2a des deux tôles 1 et 2 a été vaporisé et n'existe donc plus au niveau de la zone soudée 6.

Au cours de la seconde phase du procédé, la zone soudée 6 est de nouveau balayée par le laser 4 qui est dans ce cas réglé de manière à ce que le faisceau laser 3 soit non focalisé et forme sur ladite zone soudée 6 une tache d'impact d'un diamètre D compris entre 2 et 4 mm (Fig. 3).

Lors de cette seconde phase et comme représenté à la Fig. 3, le faisceau laser 3 non focalisé, de diamètre D, frappe le plan de la zone soudée 6 et lui transmet une énergie moindre que celle transmise lors de la première phase permettant à la zone affectée par le faisceau laser 3 d'atteindre une température comprise entre la température de fusion du revêtement 1a et 2a et sa température de vaporisation.

Ainsi, le revêtement 1a et 2a restant de part et d'autre de la zone soudée 6 fond et coule afin de recouvrir cette zone soudée 6.

On obtient alors une zone soudée 6 revêtue avec un revêtement d'épaisseur moindre que sur le reste des tôles 1 et 2, mais avec une revêtement qui reste continu et élimine tout risque de corrosion ultérieure.

Des essais ont été effectués en soudant deux tôles ayant une épaisseur de 1mm et revêtues de 20 microns de zinc.

Lors de la première phase du procédé selon l'invention, un faisceau laser focalisé pour obtenir une tache d'impact de 0,2mm a été balayé le long du plan de joint des deux tôles.

On a ainsi obtenu une zone soudée de largeur de 0,7mm et une zone non revêtue de largeur de 1mm.

Lors de la seconde phase du procédé selon l'invention, un faisceau laser non focalisé pour obtenir une tache d'impact de 2mm a été balayée le long de la zone soudée pendant le retour du laser.

On a ainsi refondu le revêtement de part et d'autre de la zone soudée et obtenu un revêtement de zinc au centre de ladite zone soudée d'une épaisseur de 8 microns.

## Revendications

1. Procédé de soudage par faisceau laser (3) de deux tôles (1, 2) minces, revêtues et disposées bord à bord ou en léger recouvrement, dans lequel au cours d'une première étape on soude les deux tôles (1, 2) en balayant le plan de joint (5) ou la zone de recouvrement desdites tôles (1, 2) à souder avec le faisceau laser (3) focalisé, caractérisé en ce que, au cours d'une seconde étape, on balaye la zone soudée (6) des tôles (1, 2) avec le faisceau laser (3) non focalisé afin d'obtenir une température locale au niveau de la zone soudée (6) comprise entre la température de fusion du revêtement et sa température de vaporisation.

2. Procédé selon la revendication 1, caractérisé en ce que, au cours de la première phase, le faisceau laser (3) est focalisé au maximum afin d'obtenir une température locale au niveau du plan de joint (5) supérieure à 4000°C.

3. Procédé selon la revendication 2, caractérisé en ce que le faisceau laser (3) focalisé forme une tache d'impact sur le plan de joint (5) d'un diamètre compris entre 0,2 et 0,4mm.

4. Procédé selon la revendication 1, caractérisé en ce que le faisceau laser (3) non focalisé forme une tache d'impact sur la zone soudée (6) d'un diamètre compris entre 2 et 4mm.

## Claims

1. Method for the welding by laser beam (3) of two thin metal sheets (1, 2), coated and disposed side by side or slightly overlapping, in which, during a first step, the two metal sheets (1, 2) are welded by sweeping the joint line (5) or the overlap area of the said metal sheets (1, 2) to he welded with the laser beam (3) focused, characterised in that, during a second step, the welded area (6) of the metal sheets (1, 2) is swept with the laser beam (3) unfocused, so as to obtain a local temperature in the welded area (6) that is between the fusion temperature of the coating and its vaporisation temperature.

2. Method according to Claim 1, characterised in that, during the first phase, the laser beam (3) is focused to the maximum extent so as to obtain a local temperature on the joint line (5) that is higher than 4000° C.

3. Method according to Claim 2, characterised in that the focused laser beam (3) forms an impact mark on the joint line (5) with a diameter of between 0.2 and 0.4 mm.

4. Method according to Claim 1, characterised in that the unfocused laser beam (3) forms an impact mark on the welded area (6) with a diameter of between 2 and 4 mm.

## Patentansprüche

1. Verfahren zur Laserstrahl (3)-Schweißung von zwei dünnen Blechen (1, 2), die überzogen und Rand an Rand oder in leichter Überdeckung angeordnet sind, bei welchem in einem ersten Schritt die beiden Bleche (1, 2) verschweißt werden, indem die Ebene des Stoßes (5) oder die Überdeckungszone der zu verschweißenden Bleche (1, 2) mit dem fokussierten Laserstrahl (3) überstrichen wird, dadurch gekennzeichnet, daß in einem zweiten Schritt die geschweißte Zone (6) der Bleche (1, 2) mit dem nicht fokussierten Laserstrahl (3) überstrichen wird, um an der geschweißten Zone (6) eine lokale Temperatur zwischen der Schmelztemperatur des Überzugs und seiner Verdampfungstemperatur zu erzielen.

2. Verfahren nach Anspruch 1, dadurch gekennzeichnet, daß in der ersten Phase der Laserstrahl (3) maximal fokussiert ist, um eine lokale Temperatur an der Ebene des Stoßes (5) von über 4000°C zu erzielen.

3. Verfahren nach Anspruch 2, dadurch gekennzeichnet, daß der fokussierte Laserstrahl (3) einen Auftrefffleck auf der Ebene des Stoßes (5) mit einem Durchmesser zwischen 0,2 und 0,4 mm ausbildet.

4. Verfahren nach Anspruch 1, dadurch gekennzeichnet, daß der nicht fokussierte Laserstrahl (3) einen Auftrefffleck auf der geschweißten Zone (6) mit einem Durchmesser zwischen 2 und 4 mm ausbildet.
